# EUROPÄISCHE PATENTSCHRIFT

(11) **EP 2 707 250 B1**
(45) Veröffentlichungstag und Bekanntmachung des Hinweises auf die Patenterteilung: **18.05.2016**
(21) Anmeldenummer: 12716371.5
(22) Anmeldetag: 18.04.2012
(51) Int. Cl.: B60N 2/36, B60N 2/30, B60N 2/22

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, EN PARTICULIER SIÈGE DE VÉHICULE AUTOMOBILE

(30) Priorität: 12.05.2011 DE 102011101879
(43) Veröffentlichungstag der Anmeldung: 19.03.2014
(73) Patentinhaber: Johnson Controls Components GmbH & Co. KG, 67657 Kaiserslautern (DE)
(72) Erfinder: BÖHM, Andre, 67659 Kaiserslautern (DE); RECKTENWALD, Ralph, 66629 Freisen (DE)
(74) Vertreter: Finger, Catrin
(86) Internationale Anmeldenummer: PCT/EP2012/057078
(87) Internationale Veröffentlichungsnummer: WO 2012/152553

(56) Entgegenhaltungen:
- WO-A1-96/34547
- DE-B3-102004 014 605
- DE-B3-102008 012 714
- DE-U1- 8 529 359
- US-A- 5 211 445

## Beschreibung

Die Erfindung betrifft einen Fahrzeugsitz, insbesondere einen Kraftfahrzeugsitz, mit den Merkmalen des Oberbegriffs des Anspruches 1.

Aus der DE 10 2008 012 714 B3 ist ein Fahrzeugsitz der eingangs genannten Art bekannt. Die Lehne weist auf beiden Fahrzeugsitzseiten einen Lehnenträger, der mittels eines Beschlags an der Basisstruktur verriegelbar angelenkt ist, und eine Lehnenstruktur, die auf beiden Fahrzeugsitzseiten mittels jeweils eines Gelenks am zugeordneten Lehnenträger angelenkt und mittels einer Verriegelungsvorrichtung mit dem Lehnenträger verriegelbar ist, auf. Auf einer Fahrzeugsitzseite ist eine Federeinheit vorgesehen, bestehend aus einer Gasfeder und einem Endanschlag für die Gasfeder. Die Federeinheit ist versetzt zum Beschlag an der Basisstruktur und versetzt zum Gelenk an einem Arm der Lehnenstruktur angelenkt.

Der Übergang von der Gebrauchsstellung in die Nichtgebrauchsstellung erfolgt durch Entriegeln und Schwenken der Lehnenstruktur nach vorne und des Lehnenträgers nach hinten. Die schwenkende Lehnenstruktur definiert einen Schwenkwinkel (relativ zum Lehnenträger). Wenn die Lehnenstruktur einen bestimmten Schwenkwinkelbereich erreicht, gelangt die Federeinheit in ihren Endanschlag, so dass die Anlenkstellen der im Endanschlag befindlichen Federeinheit (welche also ein Getriebeglied bildet), das Gelenk und der Beschlag temporär ein Viergelenk definieren, welches die aus Lehnenträger und Lehnenstruktur bestehende Kinematik steuert, solange sich die Lehnenstruktur in dem bestimmten Schwenkwinkelbereich befindet. In der Endphase des Übergangs in die Nichtgebrauchsstellung wird das temporäre Viergelenk wieder aufgehoben, und die Kinematik funktioniert als insbesondere ungesteuertes Zweigelenk.

Aus der DE 10 2004 014 605 B3 ist ebenfalls ein Fahrzeugsitz bekannt, der von einer Gebrauchsstellung in eine Nichtgebrauchsstellung überführbar ist. Dabei ist zur Unterstützung dieser Bewegung eine Kompensationsfeder vorgesehen, welche beispielsweise als Blattfeder ausgebildet ist.

Weiterhin sind aus US 5,211,445 A, DE 85 29 359 U1 und WO 96/34547 A1 Sitze mit Blattfedern bekannt.

Darüber hinaus ist aus der DE 2011 113 789 B4 ein Fahrzeugsitz mit einer starren Anschlagskoppel bekannt, wobei die Anschlagskoppel zwischen einer Basisstruktur und einer Lehnenstruktur versetzt zu einem Lehnenträger wirkt.

Der Erfindung liegt die Aufgabe zu Grunde, einen Fahrzeugsitz der eingangs genannten Art gegenüber dem Stand der Technik zu verbessern und kostengünstiger zu gestalten. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die Kinematik der Lehne wird mittels des temporär bestehenden Mehrgelenks gesteuert. Während dieser Phase des Bestehens des Mehrgelenks ist nur ein Freiheitsgrad vorhanden, d.h. es findet ein definierter Übergang, vorzugsweise in die Nichtgebrauchsstellung, statt. Die Verwendung einer Blattfeder als Getriebeglied dieses Mehrgelenks ist kostengünstiger gegenüber einer Gasdruckfeder. Die Verwendung eines Mehrgelenks zur Steuerung einer Kinematik ist nicht auf den Übergang in eine Nichtgebrauchsstellung beschränkt. Es ist auch denkbar, damit eine andere Bewegung der Lehne, beispielsweise eine Neigungseinstellung, oder eine Höheneinstellung oder Neigungseinstellung der Sitzkissenstruktur zu steuern. Der Begriff "steuern" ist weit auszulegen, so dass das Mehrgelenk auch aus Teilen der Lehne bestehen oder diese tragen kann.
Die Blattfeder wirkt in ihrer entspannten Strecklage als Zugkoppel, d.h. sie wird auf Zug belastet. Wenn die Strecklage, beispielsweise geometrisch bedingt, verlassen werden muss, biegt sich die Blattfeder, und das temporäre Viergelenk ist aufgehoben. In ihren gebogen Lagen baut die Blattfeder erfindungsgemäß eine Spannung auf, aufgrund derer sie als Druckfeder wirken kann, beispielsweise um der Gewichtskraft der Lehne entgegen zu wirken, ebenso wie eine vorzugsweise zusätzlich vorhandene Lehnenkompensationsfeder. Eine gewisse Länge der Blattfeder erlaubt den Aufbau einer ausreichenden Spannung bereits bei geringen Krümmungen der Blattfeder, d.h. es besteht ein geringer Bauraumbedarf.
In der Nichtgebrauchsstellung ist die Lehnenstruktur vorzugsweise auf einer vorderen Abstützung, die vorzugsweise an der Basisstruktur ausgebildet, und auf einer hinteren Abstützung, die vorzugsweise an der Fahrzeugstruktur ausgebildet ist, abgelegt. Außer einer verbesserten Krafteinleitung beim Beladen des Fahrzeugsitzes in der Nichtgebrauchsstellung ist es damit bei der Rückkehr von der Nichtgebrauchsstellung in die Gebrauchsstellung möglich, dass die Lehnenunterkante entlang einer - der hinteren Abstützung benachbarten - Führungsbahn an der Fahrzeugstruktur gleitet, so dass wiederum nur ein Freiheitsgrad für die Kinematik vorliegt.
Der erfindungsgemäße Fahrzeugsitz gleicht in mehreren Ausgestaltungsmerkmalen den in der DE 10 2008 012 714 B3 und in der WO 2007/006440 A2 als zweites Ausführungsbeispiel beschriebenen Fahrzeugsitzen, weshalb deren diesbezüglicher Offenbarungsgehalt hiermit erwähnt wird.

So kann beim Übergang von der Gebrauchsstellung in die Nichtgebrauchsstellung, wenn die entriegelte Lehnenstruktur nach vorne und der durch die Lehnenstruktur zwangsgesteuert entriegelte Lehnenträger nach hinten schwenkt, eine gegenüber einer Tischstellung tiefere Nichtgebrauchsstellung (Bodenstellung) erreicht werden, welche im Gegensatz zu einer Liegestellung zum Beladen geeignet ist. Eine Sitzkissenstruktur schwenkt vorzugsweise um etwas mehr als 180° nach vorne, wobei dann in der Nichtgebrauchsstellung die ursprüngliche Unterseite der Sitzkissenstruktur mehr oder weniger bündig und eben an die ursprüngliche Rückseite der dahinter gelegenen Lehnenstruktur anschließt.

Ein zwangsgesteuertes Entriegeln des Beschlags vereinfacht die vom Benutzer vorzunehmende Betätigung, indem dieser beispielsweise nur die Verriegelungsvorrichtung der Lehnenstruktur entriegeln muss, während die Lehnenstruktur das Entriegeln des Lehnenträgers vornimmt, also auf den Beschlag einwirkt. Vorzugsweise entriegelt die Lehnenstruktur den Beschlag mittels einer Koppel, die vorzugsweise starr ausgebildet ist. Für einen speziellen zeitlichen Bewegungsablauf kann die Koppel einen Leerweg vorsehen, beispielsweise eine Schlitz-Zapfen-Führung, mittels welcher das zwangsgesteuerte Entriegeln verzögert und auf einen bestimmten Schwenkwinkelbereich der Lehnenstruktur eingestellt werden kann.

Vorzugsweise ist auf jeder Fahrzeugsitzseite genau ein Lehnenträger vorgesehen, beispielsweise in Form einer Schwinge, wobei die beiden Lehnenträger durch Querverbindungen gekoppelt sein können. Dies stabilisiert die Lehne für den Normalgebrauch und für den Crashfall. Die für den Übergang zwischen Gebrauchsstellung und Nichtgebrauchsstellung vorgesehenen Federn oder Getriebeverbindungen brauchen nur auf einer Fahrzeugsitzseite vorhanden sein, vorzugsweise auf verschiedenen Fahrzeugsitzseiten. So kann die Blattfeder, die zur Einwirkung auf die Bewegung der Lehnenstruktur vorgesehen ist, bei einer Neigungseinstellung zur Kompensation des Lehnengewichts beitragen.

Die Blattfeder ist auch für Fahrzeugsitze mit einer anderen Kinematik als der beschriebenen geeignet.

Im Folgenden ist die Erfindung anhand eines in der Zeichnung dargestellten Ausführungsbeispiels näher erläutert. Es zeigen
- Fig. 1: eine linke Seitenansicht des Ausführungsbeispiels in der Gebrauchsstellung,
- Fig. 2: eine Fig. 1 entsprechende Seitenansicht in einer ersten Zwischenstellung beim Übergang in die Nichtgebrauchsstellung während des Bestehens des temporären Viergelenks,

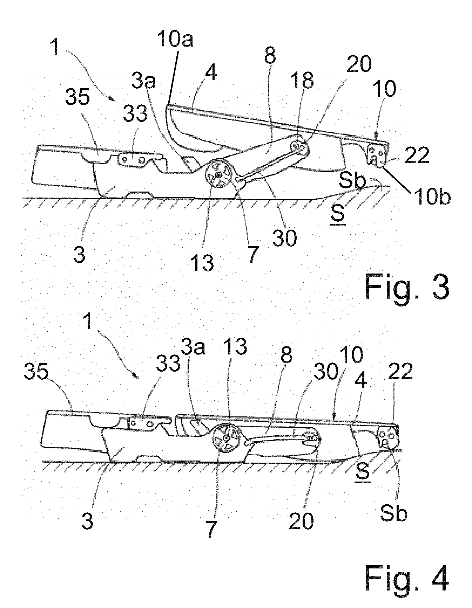

- Fig. 3: eine Fig. 1 entsprechende Seitenansicht in einer Zwischenstellung beim Übergang in die Nichtgebrauchsstellung nach Aufhebung des temporären Viergelenks,
- Fig. 4: eine Fig. 1 entsprechende Seitenansicht in der Nichtgebrauchsstellung,

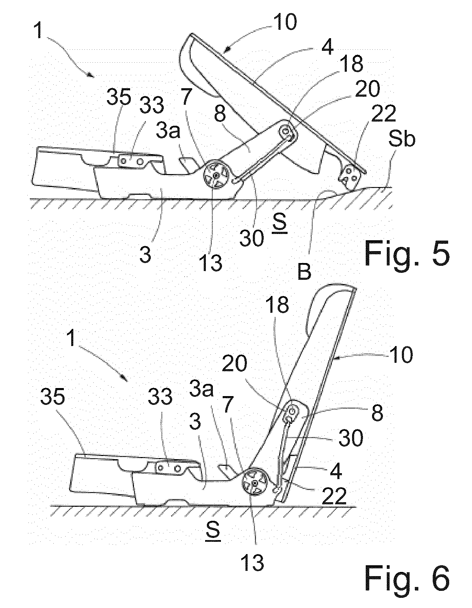

- Fig. 5: eine Fig. 4 entsprechende Seitenansicht in einer ersten Zwischenstellung bei der Rückkehr in die Gebrauchsstellung,
- Fig. 6: eine Fig. 4 entsprechende Seitenansicht in einer zweiten Zwischenstellung bei der Rückkehr in die Gebrauchsstellung,
- Fig. 7: eine rechte Seitenansicht des Ausführungsbeispiels in der Gebrauchsstellung,
- Fig. 8: eine Fig. 7 entsprechende Seitenansicht in einer Zwischenstellung beim Übergang in die Nichtgebrauchsstellung während des Bestehens des temporären Viergelenks, und

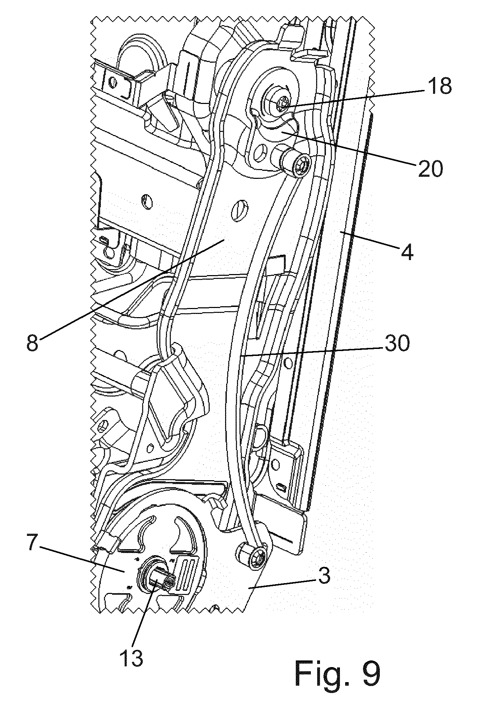

- Fig. 9: eine Detailansicht des Ausführungsbeispiels in der Gebrauchsstellung im Bereich der Blattfeder.

Im Ausführungsbeispiel ist ein Fahrzeugsitz 1 für eine hintere, insbesondere dritte, Sitzreihe eines Kraftfahrzeuges vorgesehen, wobei die Anordnung des Fahrzeugsitzes 1 innerhalb des Kraftfahrzeuges und dessen gewöhnliche Fahrtrichtung die nachfolgend verwendeten Richtungsangaben definieren. Als Teile seiner tragenden Struktur weist der Fahrzeugsitz 1 eine Basisstruktur 3 und eine Lehnenstruktur 4, welche in an sich bekannter Weise gepolstert ist, auf. Die Basisstruktur 3 ist vorliegend fest mit der Fahrzeugstruktur S des Kraftfahrzeuges verbunden, könnte aber auch mittels Sitzschienen relativ zur Fahrzeugstruktur S längseinstellbar sein. Ferner kann die Basisstruktur 3 in sich gelenkig ausgebildet sein. Auf beiden Fahrzeugsitzseiten ist an der Basisstruktur 3 je ein Beschlag 7 vorgesehen, mittels dessen je ein als Schwinge ausgebildeter Lehnenträger 8 relativ zur Basisstruktur 3 schwenkbar und verriegelbar angebracht ist. Die beiden Lehnenträger 8 definieren zusammen mit der gepolsterten Lehnenstruktur 4 die Lehne 10 des Fahrzeugsitzes 1. Es ist zunächst eine einsitzbare Gebrauchsstellung des Fahrzeugsitzes 1 beschrieben.
Der Beschlag 7 ist vorliegend als Rastbeschlag ausgebildet, wie er beispielsweise in der DE 20 2009 016 989 U1 beschrieben ist.

Dabei ist eines der beiden Beschlagteile fest mit der Basisstruktur 3 an deren hinterem Ende und das andere Beschlagteil fest mit dem Lehnenträger 8 an dessen unterem Ende verbunden. Es ist aber auch möglich, als Beschlag 7 einen Getriebebeschlag mit Freischwenkfunktion zu verwenden, wie er beispielsweise in der DE 100 48 127 A1 beschrieben ist.

Der normalerweise verriegelte Beschlag 7 ist mittels eines ersten Betätigungselementes 11 entriegelbar, indem das vorliegend als Kulissenblech ausgebildete erste Betätigungselement 11 eine Welle 13 dreht. Es kann für jeden Beschlag 7 je eine Welle 13 oder für beide Beschläge 7 eine gemeinsame Welle 13 vorgesehen sein, welche die beiden Beschläge 7 koppelt und eine synchrone Entriegelung mittels eines einzigen ersten Betätigungselementes 11 erlaubt. Das erste Betätigungselement 11 ist vorliegend auf der näher zum Fahrzeuginneren gelegenen Fahrzeugsitzseite, kurz als Innenseite des Fahrzeugsitzes 1 bezeichnet, angeordnet. Die Welle 13 fluchtet mit der Drehachse der Beschläge 7, also der Schwenkachse der Lehnenträger 8 relativ zur Basisstruktur 3.

Für eine Neigungseinstellung der Lehne 10 ist der Beschlag 7 (in der Ausbildung als Rastbeschlag) mittels eines zweiten Betätigungselementes 15, welches vorliegend als Hebelgriff ausgebildet ist, entriegelbar. Das zweite Betätigungselement 15 kann drehfest mit dem ersten Betätigungselement 11 verbunden sein, wirkt aber vorliegend direkt auf die Welle 13 ein, wobei eine Mitnahme oder eine Entkopplung in eine Drehrichtung vorgesehen sein kann. Das zweite Betätigungselement 15 ist vorliegend auf der näher zum Fahrzeugäußeren gelegenen Fahrzeugsitzseite, kurz als Außenseite des Fahrzeugsitzes 1 bezeichnet, angeordnet. In einer abgewandelten Ausführung ist kein gesondertes zweites Betätigungselement 15 vorgesehen, sondern für die Neigungseinstellung der Lehne 10 wird der Beschlag 7 beispielsweise mittels des ersten Betätigungselementes 11 betätigt.

Eine Lehnenkompensationsfeder 17, welche vorliegend als Gasfeder ausgebildet ist und beispielsweise auf der Innenseite des Fahrzeugsitzes 1 angeordnet ist, wirkt zwischen der Basisstruktur 3 und dem Lehnenträger 8. Bei entriegelten Beschlägen 7 kompensiert die Lehnenkompensationsfeder 17 wenigstens einen Teil des Gewichtes der gesamten Lehne. Die Lehnenkompensationsfeder 17 wirkt also in Vorwärtsschwenkrichtung der Lehne.

Die Lehnenstruktur 4 ist auf beiden Fahrzeugsitzseiten mittels eines als Drehlager ausgebildeten Gelenks 18 am Lehnenträger 8 angelenkt. Das Gelenk 18 ist zwischen dem oberen Ende des Lehnenträgers 8 und der Lehnenstruktur 4 in deren unterer Hälfte vorgesehen. Die durch die Gelenke 18 definierten Drehachsen fluchten miteinander und definieren die Schwenkachse der Lehnenstruktur 4 relativ zu den Lehnenträgern 8. Die Rückseite der Lehnenstruktur 4 weist in der Gebrauchsstellung im Wesentlichen nach hinten, leicht schräg zur Horizontalen. Die Gelenke 18 sind so aufgebaut, dass jeweils ein zentraler Gelenkbolzen vorgesehen ist, welcher drehfest mit der Lehnenstruktur 4 verbunden ist. Auf diesem Gelenkbolzen ist jeweils - axial versetzt zum zugeordneten Lehnenträger 8 auf dessen Außenseite - ein Arm 20 angebracht. Die beiden Arme 20 sind somit drehfest mit der Lehnenstruktur 4 verbunden.
Im Bereich des unteren Endes der Lehnenstruktur 4 ist auf wenigstens einer Fahrzeugsitzseite, vorliegend auf beiden, eine Verriegelungsvorrichtung 22 vorgesehen. Die Verriegelungsvorrichtung 22 ist vorliegend als Schloss ausgebildet, wie beispielsweise in der DE 203 02 007 U1 beschrieben.

Mittels dieser Verriegelungsvorrichtung 22 an der Lehnenstruktur 4 ist die Lehnenstruktur 4 lösbar mit dem zugeordneten Lehnenträger 8 verriegelt, genauer gesagt mit einem Gegenelement am zugeordneten Lehnenträger 8, vorliegend einem Schließbügel des Lehnenträgers 8, wobei Verriegelungsvorrichtung 22 und Gegenelement in ihren Positionen vertauscht sein können. Die Lehne 10 bildet dadurch in der Gebrauchsstellung eine kinematische Einheit. Mittels der Beschläge 7 sind mehrere Gebrauchsstellungen dieser kinematischen Einheit einstellbar, d.h. die Lehne 10, insbesondere die Lehnenstruktur 4, ist neigungseinstellbar. Statt der Kombination aus Gelenk 18 und Verriegelungsvorrichtung 22 kann auch ein Beschlag in der Art des Beschlags 7 vorgesehen sein.
Auf einer Fahrzeugsitzseite, vorliegend der Fahrzeugsitzseite mit der Lehnenkompensationsfeder 17, also der Innenseite des Fahrzeugsitzes 1, ist am Arm 20 eine Koppel 26 mit einem ihrer beiden Enden angelenkt. An ihrem anderen Ende ist die Koppel 26 mittels einer Schlitz-Zapfen-Führung 28 am ersten Betätigungselement 11 angelenkt, wobei vorliegend die Koppel 26 den Zapfen und das erste Betätigungselement 11 den Schlitz aufweist. Die umgekehrte Zuordnung ist auch möglich. Ferner ist auf einer Fahrzeugsitzseite, vorliegend der gegenüber der Lehnenkompensationsfeder 17 liegenden Fahrzeugsitzseite, also der Außenseite des Fahrzeugsitzes 1, eine Blattfeder 30 vorgesehen. Die Blattfeder 30 ist einerseits an der Basisstruktur 3, versetzt zum Beschlag 7 und damit versetzt zur Schwenkachse der Lehnenträger 8, und andererseits an dem auf dieser Fahrzeugsitzseite vorgesehenen Arm 20, also versetzt zum Gelenk 18 und damit versetzt zur Schwenkachse der Lehnenstruktur 4, angebracht, jeweils mit ihrem Endabschnitt drehbar auf einem Bolzen. Die Blattfeder 30 ist in ihrer Strecklage entspannt und baut beim Biegen eine Spannung auf, so dass sie dann als Druckfeder wirken kann. Lehnenkompensationsfeder 17, Koppel 26 und Blattfeder 30 sind vorliegend auf genau einer Fahrzeugsitzseite vorgesehen, können aber auch auf beiden Fahrzeugsitzseiten vorgesehen sein.
Auf beiden Fahrzeugsitzseiten ist je eine Schwinge 33 mit einem Ende angelenkt. Das andere Ende jeder Schwinge 33 ist an einer Sitzkissenstruktur 35 angelenkt, welche in an sich bekannter Weise gepolstert ist. Die einander entsprechenden Gelenke auf den beiden Fahrzeugsitzseiten fluchten untereinander. Statt mittels der Schwingen 33 und ihren jeweils zwei Schwenkachsen kann die Sitzkissenstruktur 35 in abgewandelter Ausführung direkt an der Basisstruktur 3 angelenkt sein, also mittels einer einzigen Schwenkachse, die durch zwei miteinander fluchtende Gelenke definiert wird. Die Sitzkissenstruktur 35 definiert zusammen mit ihrer Polsterung das Sitzkissen des Fahrzeugsitzes 1. Zwischen Basisstruktur 3 und Schwingen 33 und/oder zwischen Schwingen 33 und Sitzkissenstruktur 35 können Federn wirksam sein und eine Vorspannung aufbauen. Die Unterseite der Sitzkissenstruktur 35 weist in der Gebrauchsstellung im Wesentlichen nach unten, leicht schräg zur Vertikalen. In der Gebrauchsstellung des Fahrzeugsitzes 1 sind die Sitzkissenstruktur 35 und die Lehnenstruktur 4 (oder den Lehnenträgern 8 oder der Basisstruktur 3) beispielsweise miteinander verriegelt oder wirken formschlüssig mittels Anschlägen oder dergleichen zusammen.
Der Fahrzeugsitz 1 kann von der Gebrauchsstellung in eine flache Boden- oder Nichtgebrauchsstellung überführt werden. Hierzu werden die Verriegelungsvorrichtungen 22 entriegelt, gegebenenfalls auch die Verriegelung mit der Sitzkissenstruktur 35 geöffnet, und die Lehnenstruktur 4 relativ zu den Lehnenträgern 8 um die Gelenke 18 nach vorne geschwenkt. Die vorgespannte Blattfeder 30 streckt sich dabei und wirkt daher (als sich entspannende Druckfeder) unterstützend für diese Bewegung der Lehnenstruktur 4. Die Schlitz-Zapfen-Führung 28 durchfährt ihren Leerweg. Wenn die Sitzkissenstruktur 35 entriegelt ist oder in einer ungefähr vertikalen Zwischenstellung der Lehnenstruktur 4 von dieser freigegeben wird, schwenkt die Sitzkissenstruktur 35 vor, vorliegend um etwas mehr als 180°, so dass die ursprüngliche Unterseite der Sitzkissenstruktur 35 horizontal ausgerichtet ist und nach oben weist. Diese Bewegung wird vorliegend durch die besagte, durch die Federn an den Schwingen 33 aufgebaute Vorspannung unterstützt, erfolgt also automatisch.

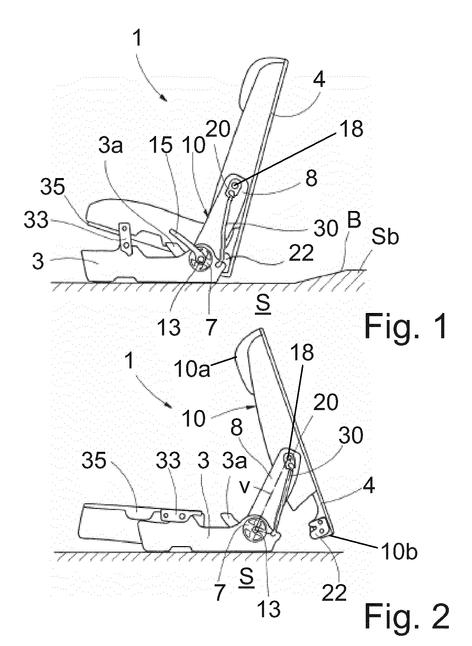

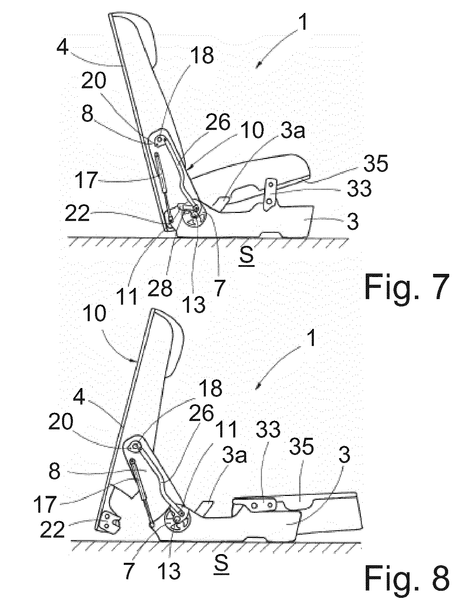

In einer besonderen Zwischenstellung der Lehnenstruktur 4, d.h. bei einem bestimmten Schwenkwinkel oder wenigstens in einem Bereich um diesen bestimmten Schwenkwinkel der Lehnenstruktur 4 ist der Leerweg der Schlitz-Zapfen-Führung 28 vollständig durchfahren. Nun nimmt die Koppel 26 das erste Betätigungselement 11 mit, wodurch die Beschläge 7 zwangsgesteuert entriegelt werden (Fig. 8). Nachdem beide Beschläge 7 entriegelt sind und die Lehnenstruktur 4 (und die Lehnenträger 8) einen bestimmten Schwenkwinkelbereich erreichen, gelangt die Blattfeder 30 in ihre Strecklage (wie in Fig. 2 dargestellt). Wegen der entriegelten Beschläge 7 können die Lehnenträger 8 nach hinten in die Horizontale geschwenkt werden, und zugleich kann die Lehnenstruktur 4 ihre Schwenkbewegung fortsetzen in Richtung zur Horizontalen. Grundsätzlich hätte diese Kinematik mehrere Freiheitsgrade.

Durch die Anlenkstellen der in der Strecklage befindlichen, auf Zug beanspruchten Blattfeder 30 sowie durch das Gelenk 18 und den Beschlag 7 auf dieser Fahrzeugsitzseite als Gelenke - oder in andere Betrachtungsweise durch die Blattfeder 30, den Arm 20, den Lehnenträger 8 und den Versatz zwischen dem Beschlag 7 und der benachbarten Anlenkstelle der Blattfeder 30 als Getriebeglieder - wird jedoch ein Viergelenk V definiert. Das Viergelenk V besteht temporär, d.h. während des Übergangs von der Gebrauchsstellung in die Nichtgebrauchsstellung über den bestimmten Schwenkwinkelbereich, also solange sich die Lehnenstruktur 4 in diesem bestimmten Schwenkwinkelbereich befindet. Das temporäre Viergelenk V steuert die (aus Lehnenträgern 8 und Lehnenstruktur 4 bestehende) Kinematik der Lehne 10. Die so gebildete Viergelenks-Kinematik-Steuerung reduziert die Freiheitsgrade der Bewegung auf einen einzigen, d.h. die Bewegungen von Lehnenstruktur 4 und Lehnenträgern 8 sind gekoppelt. Die Blattfeder 30 wirkt als Zugkoppel. Durch Nach-Vorne-Drücken der (an der Lehnenstruktur 4 vorgesehenen) Lehnenoberkante 10a lässt sich die Lehne 10 nach hinten unten bewegen. Dabei findet kein Kontakt zur Fahrzeugstruktur S statt. Die Lehnenkompensationsfeder 17 verhindert das unkontrollierte Absacken durch Gewichtskraft. Die Lehnenkompensationsfeder 17 befindet sich nie in ihrem Endanschlag.

In der Endphase des Übergangs in die Nichtgebrauchsstellung, d.h. wenn die Lehnenstruktur 4 (und die Lehnenträger 8) den bestimmten Schwenkwinkelbereich verlässt, biegt sich die Blattfeder 30 wieder, d.h. das temporäre Viergelenk V wird wieder aufgehoben, und die Kinematik funktioniert als ungesteuertes (oder anders gesteuertes) Zweigelenk. Beide Federn, d.h. die Lehnenkompensationsfeder 17 und die (als sich spannende Druckfeder wirkende) Blattfeder 30, wirken der Gewichtskraft entgegen. Durch die Lage des Schwerpunktes der Lehnenstruktur 4 vor den Gelenken 18 kippt die Lehnenstruktur 4 nach vorne auf ihre vordere Abstützung 3a, die beispielsweise an der Basisstruktur 3 ausgebildet ist. Durch Drücken auf die nunmehr oben liegende Rückseite der Lehnenstruktur 4 kann die (an der Lehnenstruktur 4 vorgesehene) Lehnenunterkante 10b auf der hinteren Abstützung Sb, die beispielsweise an der Fahrzeugstruktur S ausgebildet ist, abgelegt werden. Die Nichtgebrauchsstellung ist erreicht.

Sitzkissenstruktur 35, Lehnenträger 8 und Lehnenstruktur 4 sind wenigstens näherungsweise in die Horizontale gelangt. Die ursprüngliche Unterseite der Sitzkissenstruktur 35 schließt mehr oder weniger bündig und eben an die ursprüngliche Rückseite der dahinter gelegenen Lehnenstruktur 4 an. Die Sicherung der Nichtgebrauchsstellung kann durch das Eigengewicht erfolgen, wenn dieses größer als die Kraft der Lehnenkompensationsfeder 17 und der Blattfeder 30 ist, oder durch eine Verriegelung, beispielsweise mittels der Beschläge 7 und/oder Verriegelungsvorrichtungen 22 an entsprechenden Gegenelementen.

Im vorliegenden Ausführungsbeispiel ist die Verbindungslinie der Anbringungspunkte der Blattfeder 30 in der bevorzugten Gebrauchsstellung um 23° relativ zur Vertikalen nach hinten geneigt, schwenkt bis zur Bildung des temporären Viergelenks V um 5°, während des Bestehens des temporären Viergelenks V um 51°, und nach Aufhebung des temporären Viergelenks V noch um weitere 18°.

Zur Rückkehr, d.h. dem Übergang von der Nichtgebrauchsstellung in die Gebrauchsstellung, wird die Lehnenoberkante 10a, gegebenenfalls nach Entriegeln, nach hinten gezogen. Die Lehnenunterkante 10b gleitet entlang einer Führungsbahn B, die an der Fahrzeugstruktur S zwischen der hinteren Abstützung Sb und der Befestigung der Basisstruktur 3 an der Fahrzeugstruktur S ausgebildet ist, wodurch sich die Lehnenstruktur 4 aufwärts bewegt. Die Lehnenkompensationsfeder 17 unterstützt die Aufwärtsbewegung. Die Blattfeder 30 ist noch gebogen, so dass kein temporäres Viergelenk V definiert wird, sondern unterstützt ebenfalls die Aufwärtsbewegung. Lehnenstruktur 4 und Lehnenträger 8 bewegen sich als freie Zweigelenks-Kinematik in die letzte Phase des Anhebens. Die beiden Federn, d.h. Lehnenkompensationsfeder 17 und Blattfeder 30, sind geometrisch so angeordnet, dass jetzt ihre aufrichtende Kraft deutlich größer ist als die Gewichtskraft. Zunächst verriegeln die Beschläge 7 wieder, dann die Verriegelungsvorrichtungen 22. Die Gebrauchsstellung ist wieder erreicht.

Bei einem Wechsel in eine andere Gebrauchsstellung, d.h. eine Neigungseinstellung der Lehne, ist die Kinematik der Lehne 10 nach Entriegeln der Beschläge 7 ein Eingelenk. Dessen Bewegung nach vorne wird durch die beiden Federn 17 und 30 unterstützt, d.h. die Blattfeder 30 kompensiert ebenfalls einen Teil des Gewichts der Lehne 10.

### Bezugszeichenliste

- 1: Fahrzeugsitz
- 3: Basisstruktur
- 3a: vordere Abstützung
- 4: Lehnenstruktur
- 7: Beschlag
- 8: Lehnenträger
- 10: Lehne
- 10a: Lehnenoberkante
- 10b: Lehnenunterkante
- 11: erstes Betätigungselement
- 13: Welle
- 15: zweites Betätigungselement
- 17: Lehnenkompensationsfeder
- 18: Gelenk
- 20: Arm
- 22: Verriegelungsvorrichtung
- 26: Koppel
- 28: Schlitz-Zapfen-Führung
- 30: Blattfeder
- 33: Schwinge
- 35: Sitzkissenstruktur
- B: Führungsbahn
- S: Fahrzeugstruktur
- Sb: hintere Abstützung
- V: temporäres Viergelenk

## Patentansprüche

1. Fahrzeugsitz, insbesondere Kraftfahrzeugsitz, mit einer Basisstruktur (3), die mit der Fahrzeugstruktur (S) verbunden ist, und einer Lehne (10), die mittels einer Kinematik relativ zur Basisstruktur (3) beweglich ist, wobei der Fahrzeugsitz (1) von wenigstens einer einsitzbaren Gebrauchsstellung in eine Nichtgebrauchsstellung oder in eine weitere Gebrauchsstellung überführbar ist, wobei wenigstens temporär ein Mehrgelenk, insbesondere ein Viergelenk (V), besteht, welches die Kinematik steuert, wobei ein Federelement (30) vorgesehen ist, welche in seiner entspannten Strecklage ein Getriebeglied des Mehrgelenks bildet, wobei das Federelement (30) versetzt zum Beschlag (7) an der Basisstruktur (3) und versetzt zum Gelenk (18) an einem Arm (20) der Lehnenstruktur (4) angebracht, insbesondere angelenkt, ist, **dadurch gekennzeichnet, dass** das Federelement als Blattfeder (30) ausgebildet ist, die jeweils mit einem Endabschnitt derart drehbar auf einem Bolzen gelagert ist, dass diese (30) in ihrer Strecklage entspannt und beim Biegen eine Spannung aufbaut, wobei die Blattfeder (30) außerhalb der Strecklage als Druckfeder wirkt.

2. Fahrzeugsitz nach Anspruch 1, **dadurch gekennzeichnet, dass** die Lehne (10) wenigstens einen Lehnenträger (8), der mittels wenigstens eines Beschlags (7) an der Basisstruktur (3) verriegelbar angelenkt ist, und eine Lehnenstruktur (4), die mittels eines Gelenks (18) am Lehnenträger (8) angelenkt und mittels einer Verriegelungsvorrichtung (22) mit dem Lehnenträger (8) verriegelbar ist, aufweist.

3. Fahrzeugsitz nach Anspruch 1, **dadurch gekennzeichnet, dass** die Anlenkstellen der in Strecklage befindlichen Blattfeder (30), das Gelenk (18) und der Beschlag (7) das temporäre Viergelenk (V) definieren, welches die aus Lehnenträger (8) und Lehnenstruktur (4) bestehende Kinematik steuert, solange sich die Lehnenstruktur (4) in einem bestimmten Schwenkwinkelbereich befindet.

4. Fahrzeugsitz nach einem der vorhergehenden Ansprüche, **dadurch gekennzeichnet, dass** die Blattfeder (30) während des Bestehens des temporären Viergelenks (V) auf Zug belastet ist.

5. Fahrzeugsitz nach einem der vorhergehenden Ansprüche, **dadurch gekennzeichnet, dass** in der Endphase des Übergangs in die Nichtgebrauchsstellung das temporäre Viergelenk (V) wieder aufgehoben wird und die Kinematik als insbesondere ungesteuertes Zweigelenk funktioniert.

6. Fahrzeugsitz nach einem der vorhergehenden Ansprüche, **dadurch gekennzeichnet, dass** durch das Schwenken der Lehnenstruktur (4) der Lehnenträger (8) zwangsgesteuert entriegelt, insbesondere mittels einer Koppel (26) mit Leerweg.

7. Fahrzeugsitz nach einem der vorhergehenden Ansprüche, **dadurch gekennzeichnet, dass** beim Übergang von der Gebrauchsstellung in die Nichtgebrauchsstellung zunächst nur die Verriegelungsvorrichtung (22) entriegelt und die Lehnenstruktur (4) schwenkt, welche in einer Zwischenstellung in einem bestimmten Schwenkwinkelbereich den Beschlag (7) zwangsgesteuert entriegelt.

8. Fahrzeugsitz nach einem der vorhergehenden Ansprüche, **dadurch gekennzeichnet, dass** in der Gebrauchsstellung die mit dem Lehnenträger (8) verriegelte Lehnenstruktur (4) mittels des Beschlags (7) neigungseinstellbar ist.

## Claims

1. A vehicle seat, in particular a motor vehicle seat, having a base structure (3) which is connected to the vehicle structure (S) and a backrest (10) which can be moved relative to the base structure (3) by means of a kinematic system, wherein the vehicle seat (1) can be moved from at least one position for use in which it is possible to be seated, into a non-use position or into another position for use, wherein a multi-bar mechanism, in particular a four-bar mechanism (V), exists at least temporarily and controls the kinematic system, wherein a spring element (30) is provided which forms in the relaxed extended position thereof a gear member of the multi-bar mechanism, wherein the spring element (30) is fitted, in particular articulated, to the base structure (3) in a manner offset with respect to the fitting (7) and to an arm (20) of the backrest structure (4) in a manner offset with respect to the articulation (18), **characterized in that** the spring element is arranged as a leaf spring (30) which in each case is rotatably supported with an end portion thereof on a pin in such a manner that the leaf spring (30) is relaxed in its extended position and forms tension during bending, wherein the leaf spring (30) acts as a pressure spring outside the extended position.

2. The vehicle seat as claimed in claim 1, **characterized in that** the backrest (10) has at least one backrest carrier (8), which is articulated to the base structure (3) so as to be able to be locked by means of at least one fitting (7), and a backrest structure (4) which is articulated to the backrest carrier (8) by means of an articulation (18) and can be locked to the backrest carrier (8) by means of a locking device (22) .

3. The vehicle seat as claimed in claim 1, **characterized in that** the articulation locations of the leaf spring (30) located in the extended position, the articulation (18) and the fitting (7) define the temporary four-bar mechanism (V) which controls the kinematic system comprising the backrest carrier (8) and backrest structure (4), as long as the backrest structure (4) is located in a specific pivot angle range.

4. The vehicle seat as claimed in one of the preceding claims, **characterized in that** the leaf spring (30) is loaded in terms of tension during the existence of the temporary four-bar mechanism (V).

5. The vehicle seat as claimed in one of the preceding claims, **characterized in that** in the end phase of the transition into the non-use position, the temporary four-bar mechanism (V) is neutralized again and the kinematic system acts in particular as an uncontrolled two-bar mechanism.

6. The vehicle seat as claimed in one of the preceding claims, **characterized in that**, as a result of the pivoting of the backrest structure (4), the backrest carrier (8) is unlocked in a force-controlled manner, in particular by means of a coupling (26) having an non-loaded path.

7. The vehicle seat as claimed in one of the preceding claims, **characterized in that**, when moving from the position for use into the non-use position, firstly only the locking device (22) is unlocked and pivots the backrest structure (4) which, in an intermediate position in a specific pivot angle range, unlocks the fitting (7) in a force-controlled manner.

8. The vehicle seat as claimed in one of the preceding claims, **characterized in that**, in the position for use, the backrest structure (4) which is locked to the backrest carrier (8) can be adjusted in terms of inclination by means of the fitting (7).

## Revendications

1. Siège de véhicule, en particulier siège de véhicule automobile, comprenant une structure de base (3) qui est connectée à la structure de véhicule (S) et un dossier (10) qui est déplaçable par rapport à la structure de base (3) au moyen d'une cinématique, le siège de véhicule (1) pouvant être transféré depuis au moins une position d'utilisation en tant que siège dans une position de non-utilisation ou dans une autre position d'utilisation, une articulation multiple, en particulier un quadrilatère articulé (V), étant créé(e) au moins temporairement, lequel ou laquelle commande la cinématique, un élément de ressort (30) étant prévu, lequel, dans sa position étirée détendue, forme un organe de transmission de l'articulation multiple, l'élément de ressort (30) étant monté, en particulier articulé, de manière décalée par rapport à la ferrure (7), sur la structure de base (3) et, de manière décalée par rapport à l'articulation (18), sur un bras (20) de la structure de dossier (4), **caractérisé en ce que** l'élément de ressort est réalisé sous forme de ressort à lame (30) qui est à chaque fois supporté par une partie d'extrémité de manière rotative sur un boulon de telle sorte que ledit ressort à lame (30) se détende dans sa position étirée et crée une contrainte lors de sa flexion, le ressort à lame (30) agissant en tant que ressort de compression en dehors de la position étirée.

2. Siège de véhicule selon la revendication 1, **caractérisé en ce que** le dossier (10) présente au moins un support de dossier (8) qui est articulé de manière verrouillable à la structure de base (3) au moyen d'au moins une ferrure (7), et une structure de dossier (4) qui est articulée au support de dossier (8) au moyen d'une articulation (18) et qui peut être verrouillée au support de dossier (8) au moyen d'un dispositif de verrouillage (22).

3. Siège de véhicule selon la revendication 1, **caractérisé en ce que** les points d'articulation du ressort à lame (30) se trouvant dans la position étirée, l'articulation (18) et la ferrure (7) définissent le quadrilatère articulé temporaire (V) qui commande la cinématique constituée du support de dossier (8) et de la structure de dossier (4) tant que la structure de dossier (4) se trouve dans une plage d'angle de pivotement déterminée.

4. Siège de véhicule selon l'une quelconque des revendications précédentes, **caractérisé en ce que** le ressort à lame (30) est sollicité en traction lors de la création du quadrilatère articulé temporaire (V).

5. Siège de véhicule selon l'une quelconque des revendications précédentes, **caractérisé en ce que** dans la phase terminale de la transition dans la position de non-utilisation, le quadrilatère articulé temporaire (V) est à nouveau supprimé et la cinématique fonctionne notamment en tant que double articulation non commandée.

6. Siège de véhicule selon l'une quelconque des revendications précédentes, **caractérisé en ce que** le support de dossier (8) se déverrouille de manière commandée par force par le pivotement de la structure de dossier (4), en particulier au moyen d'une bielle (26) avec une course à vide.

7. Siège de véhicule selon l'une quelconque des revendications précédentes, **caractérisé en ce que** lors du transfert de la position d'utilisation dans la position de non-utilisation, seul le dispositif de verrouillage (22) se déverrouille initialement et la structure de dossier (4) pivote, et, dans une position intermédiaire dans une plage d'angle de pivotement déterminée, déverrouille la ferrure (7) par commande forcée.

8. Siège de véhicule selon l'une quelconque des revendications précédentes, **caractérisé en ce que** dans la position d'utilisation, l'inclinaison de la structure de dossier (4) verrouillée au support de dossier (8) peut être ajustée au moyen de la ferrure (7).
